# EUROPÄISCHE PATENTSCHRIFT

(11) **EP 3 585 632 B1**
(45) Veröffentlichungstag und Bekanntmachung des Hinweises auf die Patenterteilung: **23.02.2022**
(21) Anmeldenummer: 18706671.7
(22) Anmeldetag: 10.02.2018
(51) Int. Cl.: B60D 1/06

(54) **ANHÄNGEKUPPLUNG MIT EINEM KUGELHALS UND EINER KUPPLUNGSKUGEL SOWIE VERFAHREN ZU DEREN HERSTELLUNG**
TRAILER COUPLING HAVING A BALL NECK AND A COUPLING BALL, AND METHOD FOR PRODUCTION THEREOF
ATTELAGE DE REMORQUE AVEC UN COL DE BOULE ET UNE BOULE D'ATTELAGE AINSI QUE PROCÉDÉ POUR SA FABRICATION

(30) Priorität: 23.02.2017 DE 102017103740; 28.07.2017 DE 102017117168
(43) Veröffentlichungstag der Anmeldung: 01.01.2020
(60) Teilanmeldung: 22151172.8
(73) Patentinhaber: WESTFALIA - Automotive GmbH, 33378 Rheda-Wiedenbrück (DE)
(72) Erfinder: ANGERMANN, Kay, 04720 Döbeln (DE); DRÜCKER, Michael, 33332 Gütersloh (DE); GROSS, Waldemar, 48165 Münster (DE); WEINER, Marc, 33332 Gütersloh (DE); WYRWICH, Martin, 33378 Rheda-Wiedenbrück (DE)
(74) Vertreter: Patentanwälte Bregenzer und Reule Partnerschaftsgesellschaft mbB
(86) Internationale Anmeldenummer: PCT/EP2018/053368
(87) Internationale Veröffentlichungsnummer: WO 2018/153704

(56) Entgegenhaltungen:
- WO-A1-2014/165922
- DE-U1-202010 008 924

## Beschreibung

Die Erfindung betrifft eine Anhängekupplung für ein Kraftfahrzeug, wobei die Anhängekupplung einen Kupplungsarm aufweist, an dessen freiem Endbereich ein Kugelhals ausgebildet ist, auf dem eine Kupplungskugel zum Anhängen eines Anhängers oder Ankoppeln eines Lastenträgers an das Kraftfahrzeug angeordnet ist, wobei die Kupplungskugel an ihrer von dem Kugelhals abgewandten Seite kugelförmig ist und an ihrer dem Kugelhals zugewandten Seite eine Kugelsegmentebene aufweist, wobei zwischen der Kugelsegmentebene und einem Abschnitt des Kugelhalses, der einen kleineren Außenumfang als die Kugelsegmentebene aufweist, ein Kehlabschnitt mit einer zwischen dem Kugelhals und der Kugelsegmentebene konkav verlaufenden Übergangskontur angeordnet ist, die mit einem Kupplungskugel-Übergangsbereich in eine Außenkontur der Kupplungskugel, insbesondere in die Kugelsegmentebene, und mit einem Kugelhals-Übergangsbereich in eine Außenoberfläche des Kugelhalses übergeht. Ferner betrifft die Erfindung ein Verfahren zur Herstellung einer derartigen Anhängekupplung. Das Dokument WO 2014/165922 A1 offenbart eine Anhängekupplung gemäß dem Oberbegriff des Anspruchs 1.

Eine typische Kugelstange bzw. ein Kugelstangenhals gemäß Norm ist z.B. nach ISO 1302 und ECE-R 55 ausgestaltet. Die Kupplungskugel hat einen Solldurchmesser von beispielsweise etwa 50 mm, der Kugelhals einen Durchmesser von 29 mm. Die Kupplungskugel ist in der Regel oben abgeflacht und weist eine untere Kugelsegmentebene auf, die als Kreisringfläche ausgestaltet ist. Zwischen der Kreisringfläche und dem zylindrischen Außenumfang des Kugelhalses erstreckt sich üblicherweise eine Kehle. Während die Kupplungskugel an sich und auch der Kugelhals für sich gesehen relativ belastbar sind, treten bei höheren Belastungen im Bereich des Kehlabschnitts oder am Übergang von Kupplungskugel zum Kehlabschnitt oder Kugelhals zum Kehlabschnitt hohe Biegespannungen auf, die zum Kollabieren und Brechen des Kupplungsarms führen können.

Zur Lösung der Aufgabe ist bei einer Anhängekupplung der eingangs genannten Art vorgesehen, dass die konkave Übergangskontur einen gekrümmten Verlauf mit nicht konstantem Radius aufweist und/oder mit mindestens zwei voneinander verschiedenen Radien aufweist.

Der nicht konstante Radius kann also beispielsweise zwei oder weitere voneinander verschiedene Radien umfassen oder der gekrümmte Verlauf durch zwei oder mehrere voneinander verschiedene Radien gebildet sein. Die Radien gehen vorzugsweise tangential und/oder gleichmäßig ineinander über.

Dabei ist es vorteilhaft, wenn die Radien im Bereich der Kugelsegmentebene kleiner als im Bereich des Kugelhalses sind.

Die Anhängekupplung gemäß der Erfindung ist zweckmäßigerweise zu einem kugelgelenkigen Lagern einer Anhänger-Zugkugelkupplung geeignet. Eine Kupplungspfanne bzw. kugelige Aufnahmekontur der Anhänger-Zugkugelkupplung kann auf die Kupplungskugel in an sich bekannter Weise aufgesetzt werden und ist dort kugelgelenkig gelagert. Aber auch ein Lastenträger kann auf die Kupplungskugel aufgesetzt werden und mit der Anhängekupplung verspannt werden.

Der freie Endbereich des Kupplungsarms, nämlich der Kugelhals und die Kupplungskugel sind zweckmäßigerweise einstückig oder aus einem Stück gefertigt oder hergestellt. Auch ein den Kugelhals tragender Armkörper, auf den noch eingegangen wird, kann einstückig mit Kugelhals und Kupplungskugel sein. Es ist allerdings auch möglich, dass der Armabschnitt durch einen ersten Körper und der Kugelhals sowie die Kupplungskugel durch einen zweiten Körper gebildet sind, die miteinander verbunden sind, beispielsweise verschraubt, verschweißt, verklebt oder dergleichen.

Der Kugelhals und die Kupplungskugel sind zweckmäßigerweise rotationssymmetrisch. Insbesondere sind sie um dieselbe Rotationsachse symmetrisch.

Zur Verbindung des Kugelhalses mit einem Armabschnitt kann ein Schraubgewinde vorgesehen sein, welches am freien Endbereich oder am von der Kupplungskugel abgewandten Bereich des Kugelhalses angeordnet ist. Der von der Kupplungskugel abgewandte Bereich des Kugelhalses kann aber auch ein Steckkörper zum Einstecken oder Aufstecken auf oder an eine entsprechende Steckaufnahme an dem Armkörper sein.

Der Armkörper selbst wiederum, an dem der Kugelhals und die Kupplungskugel angeordnet sind, kann rotationssymmetrisch sein, muss es aber nicht. Insbesondere können an dem Armkörper Verstärkungen, Verstärkungsrippen, Vertiefungen, Aussparungen oder dergleichen angeordnet oder vorgesehen sein.

Die Kupplungskugel und der Kugelhals können beispielsweise im Rahmen eines Gussverfahrens hergestellt sein. Bevorzugt ist jedoch eine Umformung eines Rohlings insbesondere im Bereich der Übergangskontur zur Bildung von Kupplungskugel und Kugelhals.

Das erfindungsgemäße Verfahren zur Herstellung einer Anhängekupplung für ein Kraftfahrzeug, wobei die Anhängekupplung einen Kupplungsarm aufweist, an dessen freiem Endbereich ein Kugelhals ausgebildet ist, auf dem eine Kupplungskugel zum Anhängen eines Anhängers oder Ankoppeln eines Lastenträgers an das Kraftfahrzeug angeordnet ist, wobei die Kupplungskugel an ihrer von dem Kugelhals abgewandten Seite kugelförmig ist und an ihrer dem Kugelhals zugewandten Seite eine Kugelsegmentebene aufweist, wobei zwischen der Kugelsegmentebene und einem Abschnitt des Kugelhalses, der einen kleineren Außenumfang als die Kugelsegmentebene aufweist, ein Kehlabschnitt mit einer zwischen dem Kugelhals und der Kugelsegmentebene konkav verlaufenden Übergangskontur angeordnet ist, die mit einem Kupplungskugel-Übergangsbereich in eine Außenkontur der Kupplungskugel, insbesondere in die Kugelsegmentebene, und mit einem Kugelhals-Übergangsbereich in eine Außenoberfläche des Kugelhalses übergeht, sieht eine schneidende Bearbeitung und/oder eine Umformung, insbesondere ein Schmieden und/oder Walzen und/oder Profilieren und/oder Rollen, eines Rohlings zur Bildung des Kehlabschnitts derart vor, dass die Übergangskontur einen gekrümmten Verlauf mit nicht konstantem Radius aufweist. Das Walzen oder Profilieren kann beispielsweise auch ein sogenanntes Rundwalzen oder Rundprofilieren umfassen. Das Rundwalzen oder Rundprofilieren kann man auch als ein Querwalzen oder Querprofilieren bezeichnen oder durchgeführt werden.

Der Kupplungsarm kann zumindest partiell durch ein Längswalzen oder Walzen eines Rohlings entlang seiner Längserstreckungsrichtung hergestellt sein. Anschließend kann der sozusagen halbfertige Rohling noch durch eine zum Beispiel spanende Bearbeitung und/oder durch ein Rundwalzen in seine endgültige Form gebracht werden.

Der Rohling kann nur im Bereich des Kugelhalses und der Kupplungskugel in der obigen Weise bearbeitet sein oder werden.

Es ist ein Grundgedanke der vorliegenden Erfindung, dass statt eines typischerweise konstanten Radius', nämlich einem Radius der Übergangskontur zwischen dem zylindrischen Kugelhals und der Unterseite der Kupplungskugel, also der Kugelsegmentebene, ein gekrümmter Verlauf mit nicht konstantem Radius vorgesehen ist. Somit kann ein relativ sanfter Verlauf zwischen einerseits dem Kugelhals und/oder andererseits dem Kehlabschnitt und der Kupplungskugel erzielt werden. Harte bzw. scharfe Übergänge zwischen der "Hohlkehle" des Kehlabschnitts und der Kupplungskugel und/oder dem Kugelhals können vermieden werden. Weiterhin kann dadurch die Querschnittsfläche des Kehlabschnitts größer sein, was die Belastbarkeit des Kupplungsarms erhöht.

Bei dem erfindungsgemäßen Verfahren ist es vorteilhaft, wenn beispielsweise eine sogenannte Reckwalzung, ein Profilieren, ein Rollen oder dergleichen stattfindet, was eine relativ sanfte und materialschonende Bearbeitung der Gefügestruktur eines Rohlings ermöglicht.

Weiterhin ist es zweckmäßig, wenn das Verfahren eine Warmumformung vorsieht, beispielsweise ein Stauchen und/oder Schmieden. Selbstverständlich ist es vorteilhaft, wenn auch die Walzen-Bearbeitung, das Profilieren, das Rollen oder dergleichen bei noch zumindest warmem, halbwarmem, vorzugsweise heißem, Rohling stattfindet.

Anhand des nicht-konstant gekrümmten Verlaufes der Übergangskontur können beispielsweise lokale Kerbspannungen an sogenannten geometrischen Ecken und/oder Kerben vermieden oder deutlich verringert werden. Die Übergangskontur ist an die Belastung des Kupplungsarms angepasst. Insbesondere hat die Übergangskontur eine belastungsgerechte, an den Spannungsverlauf bei Nutzung der Anhängekupplung durch einen Anhänger oder Lastenträger angepasste Struktur.

Ein vorteilhaftes Konzept sieht vor, dass die Übergangskontur in dem Kupplungskugel-Übergangsbereich, beispielsweise direkt an die Kupplungskugel angrenzend, einen größeren Radius oder mehrere größere Radien als in einem Zwischenabschnitt zwischen den Übergangsbereichen aufweist. Auch der andere Übergangsbereich, nämlich der Kugelhals-Übergangsbereich, beispielsweise direkt an den Kugelhals angrenzend oder auch davon entfernt, hat zweckmäßigerweise mindestens einen größeren Radius als ein Zwischenabschnitt der Übergangskontur zwischen den Übergangsbereichen. Somit ist es möglich, dass die Übergangskontur zwischen den Übergangsbereichen einen relativ kleinen Radius hat, während sie in den Übergangsbereichen zur Kupplungskugel oder zum Kupplungsarm bzw. dessen Armkörper hin sanft mit großem Radius ausläuft.

An dieser Stelle sei erwähnt, dass die Radien an unmittelbar nebeneinander liegenden Punkten der Übergangskontur voneinander verschieden sein können. Es ist aber auch möglich, dass mehrere Punkte bzw. ein Linienabschnitt oder Konturabschnitt der Übergangskontur einen konstanten Radius aufweist, während daneben liegende Bereiche der Übergangskontur einen oder mehrere andere Radien aufweisen.

Bevorzugt ist es, wenn die Übergangskontur eine Vielzahl voneinander verschiedene Radien aufweist.

Weiterhin ist es vorteilhaft, wenn die Übergangskontur als eine Spline-Kontur oder ein Polynomzug ausgestaltet ist. Ein Spline oder Polynomzug ist eine Funktion, die stückweise aus Polynomen höchstens eines n-ten Grades zusammengesetzt ist. Anschlussstellen oder Knoten, wo zwei Polynomstücke oder Polynomabschnitte zusammenstoßen, sind bestimmte Bedingungen einzuhalten, beispielsweise dass der Spline oder Polynomzug (n-1)-mal stetig differenzierbar ist.

Weiterhin ist es vorteilhaft, wenn die Übergangskontur entlang ihres Verlaufs an sämtlichen Punkten mindestens einmal stetig differenzierbar ist. Es ist aber auch möglich, dass die Übergangskontur im Wesentlichen mindestens einmal stetig differenzierbar ist. Weiterhin kann vorgesehen sein, dass nur oder auch in dem Kugelhals-Übergangsbereich oder dem Kupplungskugel-Übergangsbereich oder beiden die Eigenschaft erzielt ist, dass die Übergangskontur mindestens einmal stetig differenzierbar ist. Mithin soll dadurch zum Ausdruck gebracht werden, dass die Übergangskontur vorteilhaft einen stetigen Verlauf ohne eine Ecke oder einen Winkel aufweist.

Weiterhin ist es vorteilhaft, wenn die Übergangskontur tangential oder ohne einen Winkel in die Kugelsegmentebene und/oder den Kugelhals übergeht. Die Übergangskontur geht also sozusagen sanft in die Kugelsegmentebene oder den Kugelhals über. Ein Knick oder ein Winkel würde eine lokale Kerbspannung hervorrufen können, die zu einer geringeren Belastbarkeit des Kupplungsarms führt.

Die Übergangskontur kann nur eine einzige Krümmung bzw. einen einzigen Krümmungssinn aufweisen. Es ist aber auch möglich, dass die Übergangskontur mindestens zwei oder weitere Krümmungsabschnitte aufweist, die eine gegensinnige Krümmung haben. Möglich ist beispielsweise, dass die Übergangskontur mindestens einen S-förmig verlaufenden Abschnitt oder wellenförmigen Abschnitt aufweist oder insgesamt S-förmig oder wellenförmig verläuft.

Die Übergangskontur kann sozusagen einen stetigen Verlauf aufweisen und gleiche Krümmungen haben. Es ist aber auch möglich, dass die Übergangskontur zwischen den Übergangsbereichen eine Taillierung aufweist.

Der Kehlabschnitt kann nur solche Außenumfänge aufweisen, die größer als sein Außenumfang des Kugelhalses sind. Dadurch ist die Anpassung zwischen den im Durchmesser kleineren Kugelhals und der Kupplungskugel ohne weiteres realisierbar. Es ist aber auch möglich, dass der Kehlabschnitt mindestens einen Außenumfang aufweist, der kleiner als sein Außenumfang des Kugelhalses ist. Mithin kann also der Kehlabschnitt beispielsweise eine Art Taillierung oder Engstelle aufweisen.

Der Kugelhals kann als ein durchgehender Zylinder, insbesondere als ein Kreiszylinder, ausgestaltet sein. Es ist aber auch möglich, dass der Kugelhals eine Taillierung aufweist. Die Taillierung ist beispielsweise ausgerundet. Weiterhin ist es vorteilhaft, wenn sich die Übergangskontur bis zu einem minimalen Außenumfang, insbesondere einem Kreisdurchmesser des Kugelhalses erstreckt. Es ist also auch möglich, dass der Kugelhals als solches einen kleineren Außenumfang aufweist oder eine kleinere Querschnittsfläche aufweist in demjenigen Bereich, der an die Übergangskontur angrenzt.

Die Taillierung oder eine Verengung des Kugelhalses ist zweckmäßigerweise so ausgestaltet, dass sie sich innerhalb vorbestimmter und/oder normgerechter Toleranzen bewegt. So ist beispielsweise ein maximaler Durchmesser des Kugelhalses auf 29 mm definiert, während die Taillierung oder Verengung maximal 2 mm betragen können, sodass der Durchmesser der Taillierung oder der Durchmesser des Kugelhalses im Bereich seines kleinsten Durchmessers minimal 27 mm beträgt. An einem größten Durchmesser hat der Kugelhals beispielsweise einen Durchmesser von ca. 28-29 mm, während der kleinste Durchmesser, insbesondere im Bereich der Taillierung, nur 27-28 mm beträgt.

Der Kugelhals ist zweckmäßigerweise an einem Endbereich eines Armkörpers angeordnet, dessen anderer Endbereich zur Verbindung mit dem Kraftfahrzeug ausgestaltet und vorgesehen ist. Beispielsweise ist zur Verbindung mit dem Kraftfahrzeug ein Halter vorgesehen, zum Beispiel ein Haltebock, ein Lager, eine Steckaufnahme oder dergleichen. Der Kupplungsarm oder Armkörper weist zweckmäßigerweise ein Lagerelement zum beweglichen Lagern an dem Halter oder eine Steckkontur zum Anstecken an den Halter auf. Es ist weiterhin möglich, dass an dem Kupplungsarm bzw. dem Armkörper Schraubbohrungen oder dergleichen andere Haltekonturen zur Befestigung an dem Halter vorgesehen sind.

Der Armkörper hat eine oder mehrere Krümmungen oder Biegungen zur Anpassung an eine Karosseriestruktur oder Stoßfängerkontur des Kraftfahrzeugs. Der Armkörper ist also diejenige Komponente oder derjenige Abschnitt des Kupplungsarms, der sozusagen die Verbindung zwischen Kugelhals und Kraftfahrzeug herstellt. Der Armkörper ist zweckmäßigerweise ein im Vergleich zum Kugelhals massives Bauteil.

Bevorzugt ist es, wenn der Armkörper und/oder der Kugelhals und/oder die Kupplungskugel einstückig und/oder aus einem gemeinsamen Rohling hergestellt sind.

Während es für den Kugelhals vorteilhaft ist, wenn er einen kreisringförmigen Querschnitt aufweist oder zylindrisch ist, ist es möglich, dass der Armkörper einen im Wesentlichen nicht kreisringförmigen Querschnitt aufweist. Beispielsweise hat der Armkörper Verrippungen, Tragstrukturen oder dergleichen, die beim Kugelhals nicht vorgesehen sind.

Weiterhin ist es vorteilhaft, dass der Armkörper unmittelbar neben dem Kugelhals eine größere Querschnittsfläche als der Kugelhals aufweist. Die Tragfähigkeit des Armkörpers ist zweckmäßigerweise sehr hoch.

Der Kugelhals hat zweckmäßigerweise nahe bei dem Kehlabschnitt einen kleineren Außenumfang, beispielsweise einen kleineren Durchmesser, als in einem von dem Kehlabschnitt entfernten Bereich. So kann der Kugelhals beispielsweise in der Art eines Kegelstumpfes oder dergleichen in Richtung des Kehlabschnitts auslaufen.

Die Manteloberfläche des Kugelhalses unmittelbar neben dem Kehlabschnitt oder der Kugelhals als Ganzes ist zweckmäßigerweise als Zylindermantel eines Kreiszylinders ausgebildet.

Der Kugelhals ist vorteilhaft ganz oder im Wesentlichen vorzugsweise als Kreiszylinder ausgestaltet.

Die Kugelsegmentebene kann eine reine geometrische Ebene sein, d.h. dass sie nicht als freistehende Fläche ausgestaltet ist. In der Kugelsegmentebene kann aber auch eine Außenoberfläche des Kupplungsarms vorgesehen oder ausgebildet sein. Beispielsweise ist vorgesehen, dass in der Kugelsegmentebene eine Kreisringfläche vorgesehen ist, deren Außendurchmesser an die sphärische Kugeloberfläche der Kupplungskugel angrenzt und deren Innendurchmesser oder Innenumfang an den Kupplungskugel-Übergangsbereich angrenzt oder in den Kupplungskugel-Übergangsbereich übergeht. Mithin ist also eine Kreisringfläche zum Hintergriff oder Untergriff beispielsweise eines Lastenträgers vorgesehen.

In der Kugelsegmentebene ist zweckmäßigerweise eine Planfläche vorgesehen oder die Kugelsegmentebene ist als Planfläche ausgestaltet. Beispielsweise ist die vorgenannte Kreisringfläche als Planfläche ausgestaltet.

Der Kupplungskugel-Übergangsbereich weist zweckmäßigerweise eine Vertiefung auf, die sich hinter die Kugelsegmentebene vom Kugelhals weg erstreckt. Beispielsweise ist die Vertiefung als eine Art Freistich oder Hintergriff ausgestaltet.

Dadurch ergibt sich beispielsweise ein insgesamt S-förmiger Verlauf des Übergangsbereichs. Die Übergangskontur hat also beispielsweise im Bereich des Hintergriffs oder der Vertiefung einen S-förmigen Verlauf. Die vorgenannten gegensinnigen Krümmungen oder Bogenverläufe verlaufen beispielsweise in der Kugelsegmentebene oder um die Kugelsegmentebene der Kupplungskugel herum. Ein Freistich ist beispielsweise eine Abtragung an einer rotationssymmetrischen Innenkante mit einer bestimmten Form und festgelegten Maßen, die dem eingesetzten Werkzeug bei der Fertigung einen Freiraum gibt.

Es ist aber auch möglich, dass ein S-förmiger Verlauf oder ein Verlauf der Übergangskontur mit gegensinnigen Krümmungen nahe beim Kugelhals, insbesondere im Übergangsbereich zum Kugelhals, vorgesehen ist.

Die Kupplungskugel ist an ihrem von dem Kugelhals abgewandten Bereich zweckmäßigerweise abgeflacht. Beispielweise weist die Kupplungskugel eine zu der Kugelsegmentebene parallel verlaufende Planfläche auf.

Die Kupplungskugel kann zweckmäßigerweise als eine Kugelsegment-Kugel ausgestaltet sein, die an ihren vom Kugelhals abgewandten und ihren dem Kugelhals zugewandten Bereich jeweils eine Abflachung, insbesondere eine Planfläche aufweist.

Die Abflachungen können beispielsweise als Aufsetzhilfe oder Stützflächen für einen Lastenträger dienen.

Die Kupplungskugel und/oder der Kugelhals und/oder der Kehlabschnitt sind zweckmäßigerweise durch eine Umformung hergestellt. Als Umformung eignet sich insbesondere ein Schmieden, ein Stauchen, ein Walzen oder ein Profilieren. Wie erwähnt findet die Umformung zweckmäßigerweise im warmen, insbesondere im heißen Zustand eines Rohlings zur Herstellung des Kupplungsarms statt.

Ohne weiteres ist aber auch eine zumindest abschnittsweise schneidende Bearbeitung eines Rohlings zur Herstellung des Kupplungsarms möglich.

Bevorzugt ist die Herstellung des Kupplungsarms so, dass das Grundmaterial des Kehlabschnitts eine Gefügestruktur mit im Wesentlichen oder ausschließlich ununterbrochenen oder intakten Faserverläufen aufweist. Gerade durch die erwähnte Warmumformung, das Rollen, insbesondere das Reck-Walzen oder dergleichen kann eine derartig sozusagen intakte Gefügestruktur beibehalten werden. Der Kupplungsarm ist insbesondere im Bereich der Kupplungskugel und dem darunter liegenden Kehlabschnitt und Kugelhals belastbarer als bekannte Kupplungsarme.

Die Kugelsegmentebene ist zweckmäßigerweise rechtwinklig zu einer Längsachse des Kugelhalses.

Bevorzugt bestehen der Kugelhals und die Kupplungskugel aus Metall, insbesondere aus Stahl oder Aluminium. Insbesondere ist es vorteilhaft, wenn der Kupplungsarm als Ganzes, zumindest in demjenigen Abschnitt, wo er mit dem Kugelhals und der Kupplungskugel verbunden ist oder einstückig ist, aus Stahl oder Aluminium besteht. Bevorzugt sind beispielsweise sogenannter Baustahl, höherfeste Werkstoffe, beispielsweise aus der Gruppe der Vergütungstähle oder Ausscheidungs-härtenden ferritisch-perlitischen Stähle bzw. AFP-Stähle. Von Vorteil sind ebenfalls bainitische Stähle.

Nachfolgend werden Ausführungsbeispiele der Erfindung anhand der Zeichnung erläutert. Es zeigen:
- Figur 1: eine teilweise schematische Seitenansicht einer Anordnung umfassend ein Kraftfahrzeug und einen Lastenträger, der an einer Anhängekupplung gemäß der Erfindung angeordnet ist,
- Figur 2: ein Detail D1 aus Fig. 1,
- Figur 3: ein Detail D2 aus Fig. 2,
- Figur 4: ein weiteres Ausführungsbeispiel einer erfindungsgemäßen Anhängekupplung, die in
- Figur 5: in einem Querschnitt A-A gemäß Fig. 4 dargestellt ist,
- Figur 6: ein Detail D3 aus Fig. 5,
- Figur 7: eine schematische Darstellung einer Bearbeitung der Anhängekupplung gemäß Figur 5,
- Figur 8: ein weiteres Ausführungsbeispiel einer erfindungsgemäßen Anhängekupplung, und
- Figur 9: eine schematische Darstellung zur Veranschaulichung eines Längswalzens eines Rohlings zur Herstellung beispielsweise des Kupplungsarms gemäß Figur 8,
- Figur 10: eine schematische Draufsicht auf eine der Walzen/Rollen der Anordnung gemäß Figur 9.

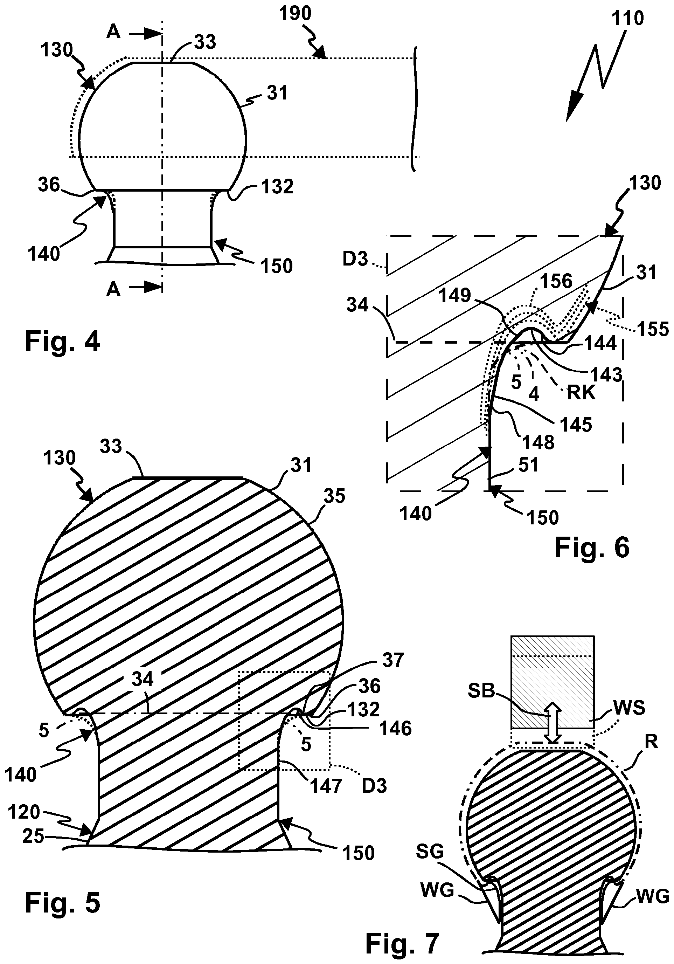

Eine Anhängekupplung 10, 110, 210 ist beispielsweise an einem Kraftfahrzeug 80 angeordnet. An die Anhängekupplung 10, 110, 210 kann ein Lastenträger 90 oder ein Anhänger 190 (in Figur 4 schematisch dargestellt) angekoppelt werden, so dass beispielsweise eine Last, insbesondere Fahrräder F, oder auch auf einem Anhänger 190 zu transportierende Lasten, durch das Kraftfahrzeug 80 transportiert werden können. Das Kraftfahrzeug 80 ist beispielsweise ein Kraftfahrzeug mit einem Verbrennungsmotor, Elektromotor oder Hybridmotor. Jedenfalls kann die Ladekapazität oder Transportkapazität des Kraftfahrzeugs 80 durch den Lastenträger 90 oder einen Anhänger 190 vergrößert werden.

Die Anhängekupplung 10 umfasst beispielsweise eine Trägeranordnung 11, die an einer Karosserie 81 des Kraftfahrzeugs 80 befestigbar ist. Die Trägeranordnung 11 umfasst beispielweise einen Querträger sowie Seitenträger oder Längsträger, die an der Karosseriestruktur der Karosserie 81 befestigbar sind, beispielsweise verschraubbar.

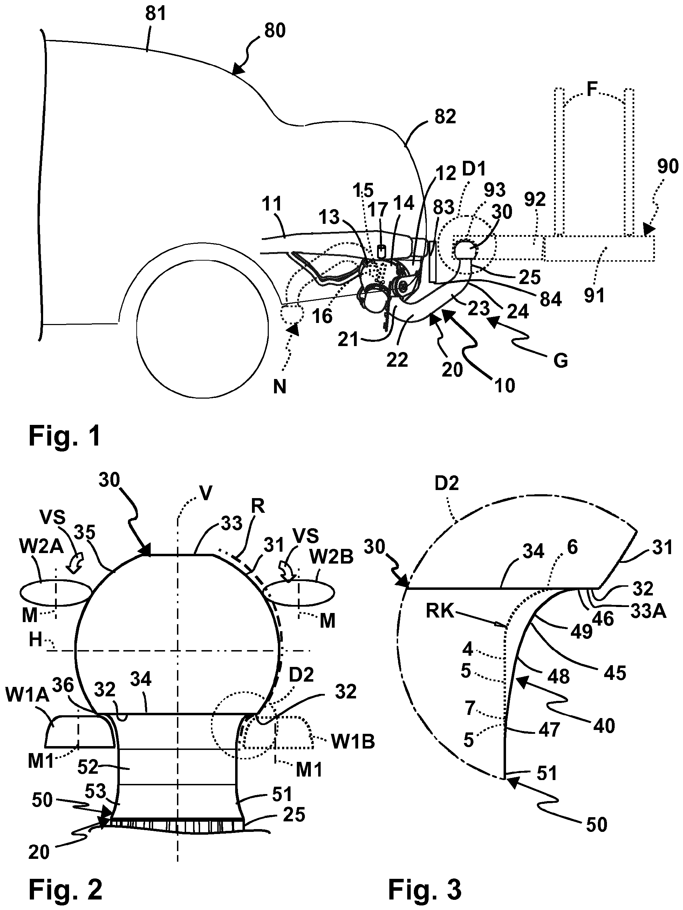

An der Trägeranordnung 11 ist ein Halter 12 der Anhängekupplung 10 befestigt. Der Halter 12 trägt einen Kupplungsarm 20 oder hält einen Kupplungsarm 20. Der Kupplungsarm 20 ist anhand eines Lagers 13 zwischen einer in der Fig. 1 dargestellten Gebrauchsstellung G, in der der Kupplungsarm 20 im Wesentlichen vor einen Stoßfänger 83 des Kraftfahrzeugs 80 vorsteht, und einer Nichtgebrauchsstellung N verstellbar, wo er insbesondere hinter dem Stoßfänger 83 verborgen am Kraftfahrzeug 80 positioniert ist. In der Gebrauchsstellung G und vorzugsweise in der Nichtgebrauchsstellung N ist der Kupplungsarm 20 anhand einer Verriegelungseinrichtung verriegelbar, beispielswiese anhand einer Formschlussverriegelung oder dergleichen. Anhand eines Antriebs 16 kann der Kupplungsarm 20 entriegelt werden, um zwischen der Gebrauchsstellung G und der Nichtgebrauchsstellung N verstellt zu werden, beispielweise verschwenkt zu werden oder linear verschoben zu werden oder beides. Mithin ist das Lager 13 beispielsweise ein Schwenklager, Schiebelager oder Schwenk-Schiebelager. Darauf kommt es aber nicht in aller erster Linie an. Der Kupplungsarm 20 kann auch fest am Halter 12 gehalten sein, beispielsweise anhand einer Verschraubung, oder anhand einer Steckverbindung lösbar mit dem Halter 12 verbindbar sein.

Zur Verstellung zwischen der Gebrauchsstellung G und der Nichtgebrauchsstellung N ist vorzugsweise ein Antrieb 17 vorgesehen, den man auch als Schwenkantrieb bezeichnen kann.

Der Kupplungsarm 20 weist einen Armkörper 26 mit einem Endbereich 21 auf, der zur Verbindung mit dem Halter 12 vorgesehen ist. Beispielsweise ist der Armkörper 26 mit einem Lagerelement 14, beispielsweise einem Lagerkopf, fest verbunden, insbesondere einstückig. Das Lagerelement 14 ist am Halter 12 beispielsweise anhand eines Lagerbolzens schwenkbar und/oder verschieblich gelagert.

An den Endbereich 21 schließt sich ein Krümmungsabschnitt 22 an. Der Krümmungsabschnitt 22 dient sozusagen dazu, dass der Kupplungsarm 20 in der Gebrauchsstellung G unter dem Stoßfänger 83 hervor nach oben vorstehen kann.

An den Krümmungsabschnitt 22 schließt sich ein im Wesentlichen gerade verlaufender Armabschnitt 23 an, der in einen weiteren Krümmungsabschnitt 24 übergeht. Man erkennt, dass durch die Krümmungsabschnitte 22, 24 eine Anpassung an eine Außenkontur des Kraftfahrzeugs 80 realisiert ist, so dass letztlich eine Kupplungskugel 30, die an den Krümmungsabschnitt 24 des Kupplungsarm 20 anschließenden Endbereich 25 des Kupplungsarms 20 angeordnet ist, eine nach oben orientierte und zum Anhängen eines Anhängers oder Ankoppeln eines Lastenträgers, beispielsweise des Lastenträgers 90, geeignete Ausrichtung aufweist. Der Krümmungsabschnitt 22 dient z.B. zur Anpassung an eine Stoßfängerkontur 84 des Kraftfahrzeugs 80.

Eine Lastenträgerkupplung 93 des Lastenträgers 90, mit der der Lastenträger 90 an der Anhängekupplung 10, insbesondere der Kupplungskugel 30 befestigt ist, wirkt beim Fahrbetrieb des Kraftfahrzeugs 80 mit angekuppeltem Lastenträger 90 mit großer Kraft auf den Kupplungsarm 20, insbesondere im Bereich des Endbereichs 25. Dort ist ein Kugelhals 50 mit im Wesentlichen zylindrischer Gestalt vorgesehen, der an sich in dieser sozusagen schlanken oder schmalen Ausprägung für den Betrieb mit den Lastenträger 90 nicht notwendig ist, jedoch für einen Betrieb mit einem Anhänger bzw. einer sogenannten Zugkugelkupplung. Damit diese nämlich eine ausreichende Drehbeweglichkeit in der Art eines Kugelgelenks an der Kupplungskugel aufweist, ist unterhalb der Kupplungskugel 30 ein entsprechender Freiraum vorhanden, der durch den Kugelhals 50 gegeben ist, dessen Außendurchmesser kleiner als derjenige der Kupplungskugel 30 ist.

Beim Lastenträger 90 sind auf dessen Tragstruktur 91, beispielsweise einem Tragegestell, eines oder mehrere Fahrräder F befestigt oder befestigbar, bei denen es sich beispielsweise auch um Elektrofahrräder handeln kann. Ferner gibt es Lastenträger, die bis zu vier Fahrräder tragen können. Entsprechend schwer ist die Last, die auf dem Lastenträger 90 lastet und über entsprechende Hebelkräfte auf den Kupplungsarm 20, insbesondere den Kugelhals 50 und den Übergang zwischen Kugelhals 50 und Kupplungskugel 30 wirken. Verstärkt wird der Effekt noch dadurch, dass der Lastenträger 90 weit vor das Heck 82 des Kraftfahrzeugs 80 vorsteht, beispielsweise weil die Lastenträgerkupplung 93 an einem entsprechend langgestreckten Tragvorsprung 92 angeordnet ist. Dies kann in der Praxis dazu führen, dass beispielsweise die Kupplungskugel 30 vom Kugelhals 50 abbricht.

Zur Vermeidung einer derartigen Situation sind bei den Anhängekupplungen 10, 110, 210 entsprechende Maßnahmen getroffen. Vorausgeschickt sei, dass in jedem der drei Ausführungsbeispiele die Kupplungskugel 30, 130, 230 grundsätzlich gleich aufgebaut ist und ebenso der Kupplungsarm 20, 120, 220. die Kugelhälse 50, 150, 250 der Anhängekupplungen 10, 110, 210 sind verschiedenartig. Gleiche oder gleichartige Abschnitte oder Komponenten der Kupplungsarme 20, 120, 220 sind mit denselben Bezugszeichen versehen.

Detailliert beschrieben werden jedoch die abweichenden Strukturen zwischen dem Kugelhals 50 und der Kupplungskugel 30 bei der Anhängekupplung 10 sowie dem Kugelhals 150 und der Kupplungskugel 130 bei der Anhängekupplung 110 sowie schließlich zwischen dem Kugelhals 250 und der Kupplungskugel 230 bei der Anhängekupplung 210. Die Kupplungsarme 20, 120, 220 weisen jeweils den Armkörper 26 auf. Selbstverständlich ist die spezielle Kontur und Ausgestaltung des Armkörpers 26 nicht einschränkend zu verstehen. Ohne weiteres sind auch andere Geometrien und Verläufe, je nach Kraftfahrzeug, an dem der Kupplungsarm zur Anwendung kommen soll, möglich. Auch die schwenkbare Lagerung des Kupplungsarms 20, 120, 220 am Kraftfahrzeug 80 ist nur eine Option und nicht zwingend.

Die Kupplungskugeln 30, 130, 230 sind im Prinzip Teilsegment-Kugeln. An einer vom Kugelhals 50, 150, 250 abgewandten Seite sind die Kupplungskugeln 30, 130, 230 abgeflacht und weisen beispielsweise eine Plan- oder Stützfläche 33 auf. Zwischen der Planfläche 33 und einer Kugelsegmentebene 34 erstreckt sich eine sphärische Kugeloberfläche 31, an der ein Anhänger in der Art eines Kugelgelenks kugelgelenkig gelagert werden kann. Beispielsweise hat die Kupplungskugel 30 im Bereich der Kugeloberfläche 31 einen Durchmesser von 50 mm.

Die Kugelsegmentebene 34 kann wie bei den Ausführungsbeispielen gemäß Fig. 1 bis 8 der Fall, als eine Planfläche ausgestaltet sein. Beispielsweise ist dort eine Kreisringfläche 32 ausgebildet. Ein Außendurchmesser 36 der Kreisringfläche 32 bildet sozusagen eine äußere Kante der kugeligen oder sphärischen Kugeloberfläche 31.

Die Kugelsegmentebene 34 und die Planfläche 33 sind zueinander parallel.

Im Bereich der Kugeloberfläche 31 ist eine Außenkontur 35 der Kupplungskugel 30, 130, 230 sphärisch, während im Bereich der Kugelsegmentebene 34 eine Planfläche 33A oder ebene Fläche ausgebildet sein kann. Allerdings sind dort auch Vertiefungen oder dergleichen andere Konturen möglich, was im Ausführungsbeispiel gemäß Fig. 4, 5, 6 zum Ausdruck kommt.

Ein Kehlabschnitt 40, 140, 240 verbindet den Kugelhals 50, 150, 250 und die Kupplungskugel 30, 130, 230.

In Fig. 3 ist ein typischer, aus dem Stand der Technik bekannter Kehlabschnitt 4 dargestellt, der einen konstanten Radius RK aufweist. Der Kehlabschnitt 4 hat eine Übergangskontur 5, die in einem Kugelhals-Übergangsbereich 6 in eine Außenoberfläche 8 eines Kugelhalses 5 übergeht. Die Außenoberfläche 8 ist in der Art eines Zylindermantels ausgestaltet. Der Kugelhals 3 ist zylindrisch. In den Übergangsbereichen 6, 7 sind Kerbspannungen zu beobachten, die bei Belastung dazu führen, dass dort Risse oder Brüche stattfinden.

Bei den nachfolgend erläuterten drei Ausführungsbeispielen sind dagegen Maßnahmen getroffen:
Bei einem Kehlabschnitt 40 des Kupplungsarms 20 ist eine Übergangskontur 45 flach auslaufend zur Kugelsegmentebene 34 und zur Außenoberfläche 51 des Kugelhalses 50 ausgestaltet. Die Übergangskontur 45 weist einen Kupplungskugel-Übergangsbereich 46 auf, wo sie in die Kupplungskugel 30 übergeht, sowie einen Kugelhals-Übergangsbereich 47 auf, der den Übergang zum Kugelhals 50 darstellt. Dazwischen erstrecken sich eine Vielzahl von sehr kleinen Abschnitten der Übergangskontur 45, beispielsweise Abschnitte 48, 49, die exemplarisch benannt sind.

Die Radien der Übergangskontur 45 sind nicht über die gesamte Länge der Übergangskontur 45 gleich. Vorzugsweise sind die Radien der Übergangskontur 45 jeweils unterschiedlich. Es können bei der Übergangskontur 45 zum Beispiel drei verschiedene Radien vorgesehen sein, insbesondere ein Radius von ca. 10-12 mm nahe beim Kugelhals 50, ein Radius von ca. 2-4 mm am Übergangsbereich zur Kugelsegmentebene 34 sowie ein Radius zwischen den beiden vorgenannten Radien mit beispielsweise 5-8 mm, insbesondere ca. 6 mm.

Bevorzugt ist es, wenn die Radien der Übergangskontur 45 größer als der konstante Radius RK sind. So ist insbesondere im Kugelhals-Übergangsbereich 47 ein deutlich größerer Radius gewählt als in Zwischenabschnitten, beispielsweise den Abschnitten 48 und 49, der Übergangskontur 45. Der Radius der Übergangskontur 45 im Kupplungskugel-Übergangsbereich 46 ist zweckmäßigerweise der kleinste Radius.

Der Kehlabschnitt 40 weist nur im Kugelhals-Übergangsbereich 47 den gleichen Außendurchmesser auf, wie der Kugelhals 50. Die Außendurchmesser des Kehlabschnitts 40 nehmen stetig bis zur Unterseite der Kupplungskugel 30 oder der Kugelsegmentebene 34 zu.

Die Übergangsbereiche 46, 47 gehen tangential in die Kugelsegmentebene 34 oder Kreisringfläche 32 bzw. in die Außenoberfläche 51 über.

Der Kugelhals 50 ist in einem mittleren Abschnitt 52 etwa zylindrisch. Ein Fußbereich 53 hingegen ist etwa konisch oder stumpfkegelig ausgestaltet. Mithin nimmt also der Durchmesser des Kugelhalses 50 zum Endbereich 25 des Kupplungsarms 20 hin zu.

Eine beispielhafte und vorteilhafte Herstellung der Konturen am Endbereich des Kupplungsarms 20, nämlich insbesondere des Kehlabschnitts 40, ist in Figur 2 schematisch angedeutet. Beispielsweise sind einander gegenüberliegend Walzen W1A und W1B vorgesehen, deren Umfangskontur etwa die Gestalt der Übergangskontur 45 aufweist. Die beiden Walzen W1A und W1B wirken von einander entgegengesetzten Seiten her auf den Endbereich des Kupplungsarms 20 ein und sind um Drehachsen M1 drehbar gelagert. Durch Rotieren eines Rohlings R, der beispielsweise ansatzweise schon die Grundform des Kupplungsarms 20 aufweist, und/oder durch Rotieren der Walzen W1A und W1B um den Rohling R herum kann die Übergangskontur 45 sozusagen gewalzt werden. Der Walzvorgang erfolgt beispielsweise um eine Längsachse V des Rohlings R herum.

Dabei ist es vorteilhaft, wenn der Rohling R und/oder die Walzen W1A und W1B in warmem oder heißem Zustand sind, was eine Umformung bzw. Verformung des Rohlings R erleichtert. Aus Gründen der Vereinfachung ist der Rohling R in der Zeichnung nur schematisch angedeutet und entspricht schon weitgehend dem bereits fertigen Kupplungsarm 20.

Auch die Kupplungskugel 30 kann durch ein Walzen hergestellt werden, beispielsweise indem Walzen W2A und W2B der Kugelkontur der Kugeloberfläche 31 entlang bewegt werden, was durch Pfeile VS angedeutet ist. Die Walzen W2A und W2B liegen einander gegenüber und können um Drehachsen M drehen, wobei die Walzen W2A und W2B um den Rohling R herum drehen können und/oder der Rohling R zwischen den Walzen W2A und W2B gedreht wird. Der Abstand zwischen den Walzen W2A und W2B wird zur Herstellung der sphärischen Kugeloberfläche 31 zu einer horizontalen Ebene H der Kupplungskugel 30 hin vergrößert und zur Kugelsegmentebene 34 und zur oberen Planfläche 33 hin verkleinert.

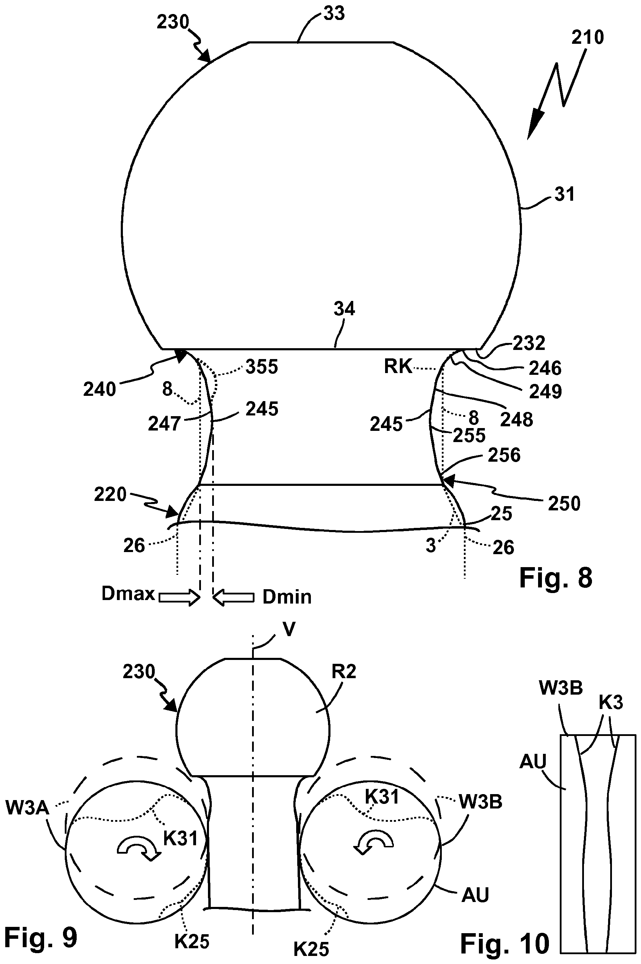

Ein Rollen oder Walzen des Rohlings R anhand der Walzen W2A und W2B und/oder der Walzen W1A und W1B wird beispielsweise als Reckwalzen bezeichnet. Dieses Walzen oder Rollieren kann auch im Nachgang zu einem Herstellungsvorgang, der im Zusammenhang mit Figur 9 noch deutlicher wird, erfolgen. Dabei wird der Rohling R beispielsweise durch ein sogenanntes Längswalzen zunächst in eine Grundform gebracht, die durch ein anschließendes radiales Walzen, wie oben beschrieben, und/oder durch eine spanende Bearbeitung eine noch eine exaktere Konturierung erfährt.

Beim Kupplungsarm 120 ist dessen Kehlabschnitt 140 im Übergang zwischen dem Kugelhals 150 und der Kupplungskugel 130 grundsätzlich konkav. Beispielsweise verläuft eine Übergangskontur 145 zwischen der Außenoberfläche 51 des Kugelhalses 150 und der Kugelsegmentebene 34 im Wesentlichen konkav, nämlich von dem Kugelhals-Übergangsbereich 147 entlang von Krümmungsabschnitten 148, 149 bis zu einer Vertiefung 143, die sich von dem Kugelhals 150 weg hinter die Kugelsegmentebene 34 erstreckt. Die Vertiefung 143 bildet einen Hinterschnitt, Freistich oder dergleichen.

Ausgehend von der Vertiefung 143 weist die Übergangskontur 145 einen Krümmungsabschnitt 144 auf, der gegensinnig zu den Krümmungsabschnitten 148, 149 gekrümmt ist. Der Krümmungsabschnitt 144 läuft bis zu der Kugelsegmentebene 34 aus, wo er in eine Kreisringfläche 132 übergeht. Die Kreisringfläche 132 liegt in der Kugelsegmentebene 34. Die Kreisringfläche 132 hat den Außendurchmesser 36 und an ihrem Innendurchmesser 37 geht der Krümmungsabschnitt 144 in die Kreisringfläche 132 über.

In Fig. 6 ist beispielhaft der Verlauf eines Kehlabschnitts 4 eingezeichnet, wie der beispielweise der Norm ECE-R 55 entspräche. Daraus wird ersichtlich, dass der Kugelhals-Übergangsbereich 147 tangential und mit einem sehr großen Radius in die Außenoberfläche 51 oder den Kugelhals 150 übergeht. Jedenfalls ist dieser Radius deutlich größer als der Radius RK der Übergangskontur 5. Der Kupplungskugel-Übergangsbereich 146, welcher sich ausgehend von der Vertiefung 143 bis zur Kreisringfläche 132 erstreckt, hat engere Radien. Dennoch ergibt sich ein günstiger Spannungsverlauf ohne überhöhte lokale Kerbspannungen.

Dazu kann auch das exemplarisch in Figur 7 angedeutete Fertigungsverfahren einer Stauchung eines Rohlings R anhand eines Stauchwerkzeugs WS beitragen. Das Stauchwerkzeug WS wird beispielsweise im Rahmen einer Bewegung SB auf den Kopfbereich, insbesondere die Planfläche 33 oder Stirnseite des Rohlings R hinbewegt und staucht den Rohling R. Im Bereich der Übergangskontur 145 oder jedenfalls des Kehlabschnitts 140 sind Widerlager-Werkzeuge WG vorgesehen, deren Außenumfangskontur oder Anpresskontur oder Stützkontur SG der Übergangskontur 145 komplementär entspricht. Der Rohling R wird sozusagen gegen die Widerlager-Werkzeuge WG gestaucht.

Vorteilhaft ergibt sich dadurch, dass eine Gefügestruktur 155 des Rohlings R einen nahezu ununterbrochenen Faserverlauf aufweist. Beispielhaft sind Fasern 156 angedeutet (siehe Figur 6).

Es versteht sich, dass die beim Kupplungsarm 20 angewendeten Fertigungsprozesse auch beim Kupplungsarm 120 eingesetzt werden können und die Stauchung gemäß Figur 7 auch beim Kupplungsarm 20 möglich ist. Es ist möglich, dass ein erfindungsgemäßer Kupplungsarm zum Beispiel zunächst gestaucht wird, ähnlich wie in Figur 7 angedeutet, und anschließend noch gewalzt oder rolliert wird, wie in Figur 2 schematisch dargestellt. Es ist auch möglich, dass eine Kupplungskugel beispielsweise die Kupplungskugel 30, 130, 230, eines Kupplungsarms, der wie vorstehend erläutert gestaucht und/oder gewalzt ist, durch eine schneidende Bearbeitung, insbesondere ein Drehen, bearbeitet oder nachbearbeitet wird.

Ein Kehlabschnitt 240 des Kupplungsarms 220 verläuft im Bereich der Kupplungskugel 230 ähnlich wie beim Ausführungsbeispiel gemäß Figuren 1-3.

Ein Kupplungskugel-Übergangsbereich 246 einer Übergangskontur 245 des Kehlabschnitts 240 läuft tangential zur Kreisringfläche 232 oder Kugelsegmentebene 34 aus. Nahe beim Kupplungskugel-Übergangsbereich 246 ist ein Krümmungsabschnitt 249 vorgesehen, der kleinere Radien als ein daran sich anschließender Krümmungsabschnitt 248 aufweist, der sich zum Kugelhals 250 hin erstreckt.

Der Krümmungsabschnitt 248 läuft in einem Kugelhals-Übergangsbereich 247 in eine Taillierung 255 des Kugelhalses 250 aus. Im Bereich der Taillierung 255 hat der Kugelhals 250 seinen minimalen Durchmesser Dmin.

Ausgehend von der Taillierung 255 nimmt der Durchmesser des Kupplungsarms 220 bis zur Kugelsegmentebene 34 kontinuierlich zu.

Auch sozusagen in Gegenrichtung, nämlich zum Endbereich 25 des Armabschnitts 26 hin, nimmt der Durchmesser des Kugelhalses 250 wieder zu. Die Mantelfläche oder die Außenoberfläche des Kugelhalses 250 weist beispielsweise einen konkaven Krümmungsabschnitt 256 zum Armabschnitt 26 hin auf.

Bevorzugt ist es, dass der Kugelhals 250 einen minimalen Durchmesser Dmin aufweist, der der Norm ECE-R 55 genügt und/oder minimal 27 mm beträgt. Der maximale Außendurchmesser Dmax des Kugelhalses 250, beispielsweise nahe beim Kupplungskugel-Übergangsbereich 246, beträgt vorzugsweise maximal 29 mm und/oder genügt der Norm ECE-R 55.

Ausgehend von der Taillierung 255 geht also einerseits der Kehlabschnitt 240 mit mehreren voneinander verschiedenen Radien tangential in die Kugelsegmentebene 34, insbesondere die Kreisringfläche 232, der Kupplungskugel 230 über, wobei auch der Kugelhals 250 von der Taillierung 255 ausgehend einen Verlauf ähnlich dem Kehlabschnitt 240 zum Armabschnitt 26 hin aufweist.

Es ist auch möglich, dass ein Kehlabschnitt eine Taillierung aufweist, was in Figur 8 angedeutet ist. Beispielsweise kann die Übergangskontur 245 eine Taillierung 355 aufweisen. Im Bereich der Taillierung 355 ist ein Außenumfang des Kehlabschnitts oder der Übergangskontur 245 kleiner als der Außenumfang des Kugelhalses 250.

Die schematische Darstellung gemäß Figur 9 zeigt ein Längswalzen eines Rohlings R2 zur Herstellung beispielsweise des Kupplungsarms 230. Dabei wird beispielsweise der Rohling R2 entlang seiner Längsachse oder Längserstreckung V zwischen Walzen oder Rollen W3A und W3B entlang bewegt und/oder die Walzen oder Rollen W3A und W3B werden entlang der Längsachse V an dem Rohling R2 vorbei bewegt, um zumindest eine Grundstruktur oder Grundform des Kupplungsarms 230 zu bilden. Dabei kann am Außenumfang AU der Rollen oder Walzen W3A und W3B eine beispielsweise nutartige oder rinnenartige Kontur K3 vorgesehen sein, die ein Negativ des durch die Walzen W3A und W3B herzustellenden Außenumfangs des Kupplungsarms 230 darstellt.

Bei entsprechend großem Außenumfang der Rollen oder Walzen W3A und W3B ist es auch möglich, dass die Kontur geometrisch unterschiedliche Querschnitte und/oder Verläufe aufweist, sodass dadurch beispielsweise die Grundkonturen der Kupplungskugel 230 und/oder des Kehlabschnitts 240 und/oder des Kugelhalses 250 geformt oder vorgeformt werden. Die Walzen haben an ihrem Außenumfang dann entsprechende Konturen oder Negativ-Formen. Der radiale Abstand der Kontur oder eines Bodens der Kontur zur Drehachse einer jeweiligen Walze ist dabei nicht konstant, wobei die jeweilige Kontur zum Formen des Kupplungsarms vorgesehen ist. Beispielsweise kann entsprechend Figur 9 eine Kontur K31 an der Walze W3A und der Walze W3B vorgesehen sein, um insbesondere die sphärische Kugeloberfläche 31 zu formen oder vorzuformen und auch den darunterliegenden Kehlabschnitt 240. Eine weitere Kontur K25 an den Walzen W3A und W3B dient beispielsweise dazu, den Kugelhals 250 und den Übergang zum Endbereich 25 des Armkörpers 26 zu formen. Die Darstellung ist schematisch und daher beispielhaft zu verstehen.

Durch diese an sich schonende und gleichmäßige Behandlung des Rohlings R2, insbesondere in noch heißem, halbwarmem oder warmem Zustand, bilden sich gleichmäßige und im Wesentlichen nicht unterbrochene Gefüge- oder Faserstrukturen aus, beispielsweise in der Art der Gefügestruktur 155.

## Patentansprüche

1. Anhängekupplung (10, 110, 210) für ein Kraftfahrzeug (80), wobei die Anhängekupplung (10, 110, 210) einen Kupplungsarm (20, 120, 220) aufweist, an dessen freiem Endbereich ein Kugelhals (50, 150, 250) ausgebildet ist, auf dem eine Kupplungskugel (30, 130, 230) zum Anhängen eines Anhängers (190) oder Ankoppeln eines Lastenträgers (90) an das Kraftfahrzeug (80) angeordnet ist, wobei die Kupplungskugel (30, 130, 230) an ihrer von dem Kugelhals (50, 150, 250) abgewandten Seite kugelförmig ist und an ihrer dem Kugelhals (50, 150, 250) zugewandten Seite eine Kugelsegmentebene (34) aufweist, wobei zwischen der Kugelsegmentebene (34) und einem Abschnitt des Kugelhalses (50, 150, 250), der einen kleineren Außenumfang als die Kugelsegmentebene (34) aufweist, ein Kehlabschnitt (40, 140, 240) mit einer zwischen dem Kugelhals (50, 150, 250) und der Kugelsegmentebene (34) konkav verlaufenden Übergangskontur (45, 145, 245) angeordnet ist, die mit einem Kupplungskugel-Übergangsbereich (46) in eine Außenkontur (35) der Kupplungskugel (30, 130, 230), insbesondere in die Kugelsegmentebene (34), und mit einem Kugelhals-Übergangsbereich (47) in eine Außenoberfläche (51) des Kugelhalses (50, 150, 250) übergeht, **dadurch gekennzeichnet, dass** die konkave Übergangskontur (45, 145, 245) einen gekrümmten Verlauf mit nicht konstantem Radius und/oder mit mindestens zwei voneinander verschiedenen Radien aufweist.

2. Anhängekupplung (10, 110, 210) nach Anspruch 1, **dadurch gekennzeichnet, dass** die Übergangskontur (45, 145, 245) in dem Kupplungskugel-Übergangsbereich (46), insbesondere unmittelbar an die Kupplungskugel (30, 130, 230) angrenzend, und/oder in dem Kugelhals-Übergangsbereich (47), insbesondere an den Kugelhals (50, 150, 250) angrenzend, einen größeren Radius oder mehrere größere Radien als in einem Zwischenabschnitt zwischen den Übergangsbereichen aufweist.

3. Anhängekupplung nach Anspruch 1 oder 2, **dadurch gekennzeichnet, dass** die Übergangskontur (45, 145, 245) an einer Vielzahl von voneinander verschiedenen Punkten eine Vielzahl voneinander verschiedene Radien aufweist und/oder als eines Spline-Kontur ausgestaltet ist.

4. Anhängekupplung nach einem der vorhergehenden Ansprüche, **dadurch gekennzeichnet, dass** die Übergangskontur (45, 145, 245) entlang ihres Verlaufs an sämtlichen Punkten oder im wesentlichen und/oder in dem Kugelhals-Übergangsbereich (47) und/oder dem Kupplungskugel-Übergangsbereich (46) mindestens einmal, vorteilhaft mindestens zweimal, stetig differenzierbar ist.

5. Anhängekupplung nach einem der vorhergehenden Ansprüche, **dadurch gekennzeichnet, dass** die Übergangskontur (45, 145, 245) tangential oder ohne einen Winkel oder in einem Winkel von 0 Grad oder 180 Grad in die Kugelsegmentebene (34) und/oder den Kugelhals (50, 150, 250) übergeht und/oder dass die Übergangskontur (45, 145, 245) mindestens zwei Krümmungsabschnitte mit gegensinniger Krümmung aufweist und/oder dass die Übergangskontur (45, 145, 245) einen S-förmig verlaufenden Abschnitt aufweist.

6. Anhängekupplung nach einem der vorhergehenden Ansprüche, **dadurch gekennzeichnet, dass** die Übergangskontur (245) zwischen den Übergangsbereichen (246, 247) eine Taillierung (355) aufweist und/oder dass der Kehlabschnitt (40, 140, 240) mindestens einen Außenumfang aufweist, der kleiner als ein Außenumfang des Kugelhalses (50, 150, 250) ist.

7. Anhängekupplung nach einem der vorhergehenden Ansprüche, **dadurch gekennzeichnet, dass** der Kugelhals (50, 150, 250) eine insbesondere ausgerundete Taillierung (255) aufweist oder dass sich die Übergangskontur (45, 145, 245) bis zu einem minimalen Außenumfang, insbesondere Kreisdurchmesser, des Kugelhalses (50, 150, 250) erstreckt.

8. Anhängekupplung nach einem der vorhergehenden Ansprüche, **dadurch gekennzeichnet, dass** der Kugelhals (50, 150, 250) an einem Endbereich eines Armkörpers (26) angeordnet ist, dessen anderer Endbereich zur Verbindung mit dem Kraftfahrzeug (80), insbesondere mit einem an dem Kraftfahrzeug (80) befestigbaren Halter (12) der Anhängekupplung, ausgestaltet und vorgesehen ist, insbesondere ein Lagerelement (14) zum beweglichen Lagern an dem Halter (12) oder eine Steckkontur zum Anstecken an den Halter (12) aufweist.

9. Anhängekupplung nach Anspruch 8, **dadurch gekennzeichnet, dass** der Armkörper (26) mindestens eine Biegung und/oder einen Krümmungsabschnitt (22, 24) zur Anpassung an eine Karosseriekontur (81) oder Stoßfängerkontur (84) des Kraftfahrzeugs (80) aufweist und/oder dass der Armkörper (26) einen im Wesentlichen nicht kreisringförmigen Querschnitt aufweist und/oder dass der Armkörper (26) zumindest unmittelbar neben dem Kugelhals (50, 150, 250) eine größere Querschnittsfläche als der Kugelhals (50, 150, 250) aufweist.

10. Anhängekupplung nach einem der vorhergehenden Ansprüche, **dadurch gekennzeichnet, dass** der Kugelhals (50, 150, 250) nahe bei dem Kehlabschnitt (40, 140, 240) einen kleineren Außenumfang, insbesondere Durchmesser, als in einem vom Kehlabschnitt (40, 140, 240) entfernteren Bereich, insbesondere einem Übergangsbereich zu einem Armkörper (26) des Kupplungsarms (20, 120, 220), aufweist und/oder dass die Manteloberfläche des Kugelhalses (50, 150, 250) unmittelbar neben dem Kehlabschnitt (40, 140, 240) als Zylindermantel eines Kreiszylinders ausgebildet ist und/oder dass der Kugelhals (50, 150, 250) ganz oder im Wesentlichen als Kreiszylinder ausgestaltet ist.

11. Anhängekupplung nach einem der vorhergehenden Ansprüche, **dadurch gekennzeichnet, dass** in der Kugelsegmentebene (34) eine Kreisringfläche (32) vorgesehen ist, deren Außendurchmesser (36) an die sphärische Kugeloberfläche (31) der Kupplungskugel (30, 130, 230) angrenzt und deren Innendurchmesser (37) oder Innenumfang an den Kupplungskugel-Übergangsbereich (46) angrenzt oder in den Kupplungskugel-Übergangsbereich (46) übergeht.

12. Anhängekupplung nach einem der vorhergehenden Ansprüche, **dadurch gekennzeichnet, dass** in der Kugelsegmentebene (34), insbesondere eine in der Kugelsegmentebene (34) vorgesehene oder angeordnete Kreisringfläche (32), eine Planfläche (33A) vorgesehen ist oder aufweist und/oder dass der Kupplungskugel-Übergangsbereich (46) eine insbesondere als Freistich ausgestaltete Vertiefung (143) aufweist, die sich hinter die Kugelsegmentebene (34) vom Kugelhals (50, 150, 250) weg erstreckt, und/oder dass die Kupplungskugel (30, 130, 230) an ihrem von dem Kugelhals (50, 150, 250) abgewandten Bereich eine zu der Kugelsegmentebene (34) parallel verlaufende Planfläche (33) aufweist.

13. Anhängekupplung nach einem der vorhergehenden Ansprüche, **dadurch gekennzeichnet, dass** die Kupplungskugel (30, 130, 230) eine Kugelsegment-Kugel ist, die an ihrem vom Kugelhals (50, 150, 250) abgewandten und ihrem dem Kugelhals (50, 150, 250) zugewandten Bereich jeweils eine Abflachung aufweist und/oder dass die Kupplungskugel (30, 130, 230) und/oder der Kugelhals (50, 150, 250) und/oder der Kehlabschnitt (40, 140, 240) durch Umformung, insbesondere durch Schmieden und/oder Stauchen und/oder Walzen und/oder Profilieren, hergestellt sind.

14. Anhängekupplung nach einem der vorhergehenden Ansprüche, **dadurch gekennzeichnet, dass** das Grundmaterial des Kehlabschnitts (40, 140, 240) eine Gefügestruktur mit im Wesentlichen oder ausschließlich ununterbrochenen oder intakten Faserverläufen aufweist und/oder dass die Kugelsegmentebene (34) rechtwinkelig zu einer Längsachse des Kugelhalses (50, 150, 250) ist und/oder dass die Übergangskontur (45, 145, 245) einen gekrümmten Verlauf mit genau zwei, drei oder vier voneinander verschiedenen Radien, aufweist.

15. Verfahren zur Herstellung einer Anhängekupplung (10, 110, 210) für ein Kraftfahrzeug (80), wobei die Anhängekupplung (10, 110, 210) einen Kupplungsarm (20, 120, 220) aufweist, an dessen freiem Endbereich ein Kugelhals (50, 150, 250) ausgebildet ist, auf dem eine Kupplungskugel (30, 130, 230) zum Anhängen eines Anhängers (190) oder Ankoppeln eines Lastenträgers an das Kraftfahrzeug (80) angeordnet ist, wobei die Kupplungskugel (30, 130, 230) an ihrer von dem Kugelhals (50, 150, 250) abgewandten Seite kugelförmig ist und an ihrer dem Kugelhals (50, 150, 250) zugewandten Seite eine Kugelsegmentebene (34) aufweist, wobei zwischen der Kugelsegmentebene (34) und einem Abschnitt des Kugelhalses (50, 150, 250), der einen kleineren Außenumfang als die Kugelsegmentebene (34) aufweist, ein Kehlabschnitt (40, 140, 240) mit einer zwischen dem Kugelhals (50, 150, 250) und der Kugelsegmentebene (34) konkav verlaufenden Übergangskontur (45, 145, 245) angeordnet ist, die mit einem Kupplungskugel-Übergangsbereich (46) in eine Außenkontur (35) der Kupplungskugel (30, 130, 230), insbesondere in die Kugelsegmentebene (34), und mit einem Kugelhals-Übergangsbereich (47) in eine Außenoberfläche (51) des Kugelhalses (50, 150, 250) übergeht, **gekennzeichnet durch** eine schneidende Bearbeitung und/oder eine Umformung, insbesondere ein Schmieden und/oder Walzen und/oder Profilieren und/oder Rollen, eines Rohlings (R) zur Bildung des Kehlabschnitts (40, 140, 240) derart, dass die konkave Übergangskontur (45, 145, 245) einen gekrümmten Verlauf mit nicht konstantem Radius aufweist, wobei vorteilhaft vorgesehen ist, dass bei der Umformung eine Gefügestruktur des Rohlings (R), insbesondere ein Faserverlauf eines Rohmaterials des Rohlings (R), im Bereich des Kehlabschnitts (40, 140, 240) ganz oder im Wesentlichen umgeformt und nicht unterbrochen wird.

## Claims

1. Trailer coupling (10, 110, 210) for a motor vehicle (80), wherein the trailer coupling (10, 110, 210) has a coupling arm (20, 120, 220), on the free end region of which a ball neck (50, 150, 250) is formed, on which a coupling ball (30, 130, 230) is arranged for attaching a trailer (190) or coupling a load carrier (90) to the motor vehicle (80), wherein the coupling ball (30, 130, 230) is spherical on the side thereof facing away from the ball neck (50, 150, 250) and has a spherical segment plane (34) on the side thereof facing the ball neck (50, 150, 250), wherein between the spherical segment plane (34) and a portion of the ball neck (50, 150, 250) which has a smaller outer circumference than the spherical segment plane (34) there is arranged a throat portion (40, 140, 240) having a transition contour (45, 145, 245) extending in a concave manner between the ball neck (50, 150, 250) and the spherical segment plane (34)), the transition contour transitioning with a coupling ball transition region (46) into an external contour (35) of the coupling ball (30, 130, 230), in particular into the spherical segment plane (34), and transitioning with a ball neck transition region (47) into an outer surface (51) of the ball neck (50, 150, 250), **characterised in that** the concave transition contour (45, 145, 245) has a curved configuration with a non-constant radius and/or with at least two radii that differ from one another.

2. Trailer coupling (10, 110, 210) according to claim 1, **characterised in that** the transition contour (45, 145, 245) in the coupling ball transition region (46), in particular directly adjoining the coupling ball (30, 130, 230), and/or in the ball neck transition region (47), in particular adjoining the ball neck (50, 150, 250), has a larger radius or a plurality of larger radii than in an intermediate region between the transition regions.

3. Trailer coupling according to claim 1 or 2, **characterised in that** the transition contour (45, 145, 245) at a number of points that differ from one another has a number of radii that differ from one another and/or is designed as a spline contour.

4. Trailer coupling according to any one of the preceding claims, **characterised in that** the transition contour (45, 145, 245) at all points along its course or substantially and/or in the ball neck transition region (47) and/or the coupling ball transition region (46) is continuously differentiable at least once, advantageously at least twice.

5. Trailer coupling according to any one of the preceding claims, **characterised in that** the transition contour (45, 145, 245) transitions tangentially or without an angle or at an angle of 0 degrees or 180 degrees into the spherical segment plane (34) and/or the ball neck (50, 150, 250) and/or that the transition contour (45, 145, 245) has at least two curved portions with curvatures in opposite directions and/or that the transition contour (45, 145, 245) has one portion running in a S-shape.

6. Trailer coupling according to any one of the preceding claims, **characterised in that** the transition contour (245) has a waisting (355) between the transition regions (246, 247) and/or that the throat portion (40, 140, 240) has at least one outer circumference, which is smaller than an outer circumference of the ball neck (50, 150, 250).

7. Trailer coupling according to any one of the preceding claims, **characterised in that** the ball neck (50, 150, 250) has an in particular rounded waisting (255) or **in that** the transition contour (45, 145, 245) extends as far as a minimum outer circumference, in particular diameter, of the ball neck (50, 150, 250).

8. Trailer coupling according to any one of the preceding claims, **characterised in that** the ball neck (50, 150, 250) is arranged on an end region of an arm body (26), the other end region of which is designed and provided for connection with the motor vehicle (80), in particular with a mount (12) of the trailer coupling that can be secured to the motor vehicle (80), in particular a bearing element (14) for movable supporting on the mount (12) or a plugging contour for plugging into the mount (12) .

9. Trailer coupling according to claim 8, **characterised in that** the arm body (26) has at least one bend and/or one curved portion (22, 24) for matching to a bodywork contour (81) or bumper contour (84) of the motor vehicle (80) and/or **in that** the arm body (26) has a substantially non-circular cross section and/or in that the arm body (26) at least directly next to the ball neck (50, 150, 250) has a larger cross-sectional area than the ball neck (50, 150, 250).

10. Trailer coupling according to any one of the preceding claims, **characterised in that** der ball neck (50, 150, 250) close to the throat portion (40, 140, 240) has a smaller outer circumference, in particular diameter, than in a region remote from the throat portion (40, 140, 240), in particular a transition region to an arm body (26) of the coupling arm (20, 120, 220) and/or that the shell surface of the ball neck (50, 150, 250) directly next to the throat portion (40, 140, 240) is configured as a cylinder surface of a circular cylinder and/or that the ball neck (50, 150, 250) is designed entirely or substantially as a circular cylinder.

11. Trailer coupling according to any one of the preceding claims, **characterised in that** in the spherical segment plane (34) a ring surface area (32) is provided, the external diameter (36) of which adjoins the spherical ball surface (31) of the coupling ball (30, 130, 230) and the internal diameter (37) or inner circumference of which adjoins the coupling ball transition region (46) or transitions into the coupling ball transition region (46).

12. Trailer coupling according to any one of the preceding claims, **characterised in that** in the spherical segment plane (34), in particular a ring surface area (32) provided or arranged in the spherical segment plane (34), a flat surface (33A) is provided or present and/or that the coupling ball transition region (46) has a recess (143) in particular designed as an undercut, extending behind the spherical segment plane (34) away from the ball neck (50, 150, 250) and/or that the coupling ball (30, 130, 230) in its region facing away from the ball neck (50, 150, 250) has a flat surface (33) running parallel to the spherical segment plane (34).

13. Trailer coupling according to any one of the preceding claims, **characterised in that** the coupling ball (30, 130, 230) is a spherical segment ball, which in its region facing away from the ball neck (50, 150, 250) and its region facing the ball neck (50, 150, 250) in each case has a flattened area and/or that the coupling ball (30, 130, 230) and/or the ball neck (50, 150, 250) and/or the throat portion (40, 140, 240) are produced by deformation, in particular by forging and/or upsetting and/or rolling and/or profiling.

14. Trailer coupling according to any one of the preceding claims, **characterised in that** the basic material of the throat portion (40, 140, 240) has a microstructure with substantially or exclusively uninterrupted or intact fibre flows and/or that the spherical segment plane (34) is at right-angles to a longitudinal axis of the ball neck (50, 150, 250) and/or that the transition contour (45, 145, 245) has a curved configuration with precisely two, three or four radii that differ from one another.

15. Method for producing a trailer coupling (10, 110, 210) for a motor vehicle (80), wherein the trailer coupling (10, 110, 210) has a coupling arm (20, 120, 220), on the free end region of which a ball neck (50, 150, 250) is formed, on which a coupling ball (30, 130, 230) is arranged for attaching a trailer (190) or coupling a load carrier (90) to the motor vehicle (80), wherein the coupling ball (30, 130, 230) is spherical on the side thereof facing away from the ball neck (50, 150, 250) and has a spherical segment plane (34) on the side thereof facing the ball neck (50, 150, 250), wherein between the spherical segment plane (34) and a portion of the ball neck (50, 150, 250) which has a smaller outer circumference than the spherical segment plane (34) there is arranged a throat portion (40, 140, 240) having a transition contour (45, 145, 245) extending in a concave manner between the ball neck (50, 150, 250) and the spherical segment plane (34)), the transition contour transitioning with a coupling ball transition region (46) into an external contour (35) of the coupling ball (30, 130, 230), in particular into the spherical segment plane (34), and transitioning with a ball neck transition region (47) into an outer surface (51) of the ball neck (50, 150, 250), **characterised by** cutting by machining and/or deformation, in particular forging and/or profiling and/or rolling, of a blank (R) to form the throat portion (40, 140, 240) such that the concave transition contour (45, 145, 245) has a curved configuration with a non-constant radius, wherein it is advantageously provided that during the deformation of a microstructure of the blank (R), in particular a fibre flow of a raw material of the blank (R), in the region of the throat portion (40, 140, 240), is completely or substantially deformed and not interrupted.

## Revendications

1. Attelage (10, 110, 210) pour un véhicule automobile (80), dans lequel l'attelage (10, 110, 210) présente un bras d'attelage (20, 120, 220), au niveau de la zone d'extrémité libre duquel un col de boule (50, 150, 250) est réalisé, sur lequel une boule d'attelage (30, 130, 230) est agencée pour l'attelage d'une remorque (190) ou le couplage d'un support de charge (90) au véhicule automobile (80), dans lequel la boule d'attelage (30, 130, 230) est sphérique au niveau de son côté éloigné du col de boule (50, 150, 250) et présente un plan de segment sphérique (34) au niveau de son côté tourné vers le col de boule (50, 150, 250), dans lequel entre le plan de segment sphérique (34) et une section du col de boule (50, 150, 250) qui présente une périphérie extérieure inférieure au plan de segment sphérique (34), une section de gorge (40, 140, 240) est agencée avec un contour de transition (45, 145, 245), s'étendant de manière concave entre le col de boule (50, 150, 250) et le plan de segment sphérique (34), et qui passe avec une zone de transition de boule d'attelage (46) à un contour extérieur (35) de la boule d'attelage (30, 130, 230), en particulier au plan de segment sphérique (34), et avec une zone de transition de col de boule (47) à une surface extérieure (51) du col de boule (50, 150, 250), **caractérisé en ce que** le contour de transition (45, 145, 245) concave présente une étendue courbée avec un rayon non constant et/ou avec au moins deux rayons différents l'un de l'autre.

2. Attelage (10, 110, 210) selon la revendication 1, **caractérisé en ce que** le contour de transition (45, 145, 245) présente dans la zone de transition de boule d'attelage (46), en particulier de manière directement contigüe à la boule d'attelage (30, 130, 230), et/ou dans la zone de transition de col de boule (47), en particulier de manière contigüe au col de boule (50, 150, 250), un rayon supérieur ou plusieurs rayons supérieurs à ceux dans une section intermédiaire entre les zones de transition.

3. Attelage selon la revendication 1 ou 2, **caractérisé en ce que** le contour de transition (45, 145, 245) présente au niveau d'une pluralité de points différents les uns des autres une pluralité de rayons différents les uns des autres et/ou est configuré en tant que contour spline.

4. Attelage selon l'une quelconque des revendications précédentes, **caractérisé en ce que** le contour de transition (45, 145, 245) peut être différencié en permanence le long de son étendue au niveau de tous les points ou sensiblement et/ou dans la zone de transition de col de boule (47) et/ou la zone de transition de boule d'attelage (46) au moins une fois, avantageusement au moins deux fois.

5. Attelage selon l'une quelconque des revendications précédentes, **caractérisé en ce que** le contour de transition (45, 145, 245) passe tangentiellement ou sans un angle ou dans un angle de 0 degré ou 180 degrés au plan de segment sphérique (34) et/ou au col de boule (50, 150, 250) et/ou que le contour de transition (45, 145, 245) présente au moins deux sections de courbure avec une courbure en sens inverse et/ou que le contour de transition (45, 145, 245) présente une section s'étendant en forme de S.

6. Attelage selon l'une quelconque des revendications précédentes, **caractérisé en ce que** le contour de transition (245) entre les zones de transition (246, 247) présente un taillage (355) et/ou que la section de gorge (40, 140, 240) présente au moins une périphérie extérieure qui est inférieure à une périphérie extérieure du col de boule (50, 150, 250).

7. Attelage selon l'une quelconque des revendications précédentes, **caractérisé en ce que** le col de boule (50, 150, 250) présente un taillage (255) en particulier arrondi ou que le contour de transition (45, 145, 245) s'étend jusqu'à une périphérie extérieure minimale, en particulier au diamètre circulaire, du col de boule (50, 150, 250).

8. Attelage selon l'une quelconque des revendications précédentes, **caractérisé en ce que** le col de boule (50, 150, 250) est agencé au niveau d'une zone d'extrémité d'un corps de bras (26), dont l'autre zone d'extrémité est configurée et prévue pour la liaison avec le véhicule automobile (80), en particulier avec un support (12) pouvant être fixé au véhicule automobile (80) de l'attelage, en particulier un élément de palier (14) pour le logement mobile au niveau du support (12) ou un contour d'enfichage pour l'enfichage sur le support (12).

9. Attelage selon la revendication 8, **caractérisé en ce que** le corps de bras (26) présente au moins une flexion et/ou une section de courbure (22, 24) pour l'adaptation à un contour de carrosserie (81) ou contour de parechocs (84) du véhicule automobile (80) et/ou que le corps de bras (26) présente une section transversale sensiblement ni annulaire ni circulaire et/ou que le corps de bras (26) présente au moins directement à côté du col de boule (50, 150, 250) une aire de section supérieure à celle du col de boule (50, 150, 250).

10. Attelage selon l'une quelconque des revendications précédentes, **caractérisé en ce que** le col de boule (50, 150, 250) présente près de la section de gorge (40, 140, 240) une périphérie extérieure inférieure, en particulier un diamètre, à celle dans une zone plus éloignée de la section de gorge (40, 140, 240), en particulier une zone de transition à un corps de bras (26) du bras d'attelage (20, 120, 220) et/ou que la surface enveloppe du col de boule (50, 150, 250) est réalisée directement à côté de la section de gorge (40, 140, 240) en tant qu'enveloppe cylindrique d'un cylindre circulaire et/ou que le col de boule (50, 150, 250) est configuré entièrement ou sensiblement en tant que cylindre circulaire.

11. Attelage selon l'une quelconque des revendications précédentes, **caractérisé en ce qu'**une surface annulaire et circulaire (32) est prévue dans le plan de segment sphérique (34), dont le diamètre extérieur (36) est contigu à la surface de boule sphérique (31) de la boule d'attelage (30, 130, 230) et dont le diamètre intérieur (37) ou la périphérie intérieure est contigüe à la zone de transition de boule d'attelage (46) ou passe à la zone de transition de boule d'attelage (46).

12. Attelage selon l'une quelconque des revendications précédentes, **caractérisé en ce que** dans le plan de segment sphérique (34), en particulier une surface annulaire et circulaire (32) agencée ou prévue dans le plan de segment sphérique (34) une surface plane (33A) est prévue ou présente et/ou que la zone de transition de boule d'attelage (46) présente une cavité (143) configurée en particulier en tant que dégagement qui s'étend derrière le plan de segment sphérique (34) à partir du col de boule (50, 150, 250), et/ou que la boule d'attelage (30, 130, 230) présente au niveau de sa zone éloignée du col de boule (50, 150, 250) une surface plane (33) s'étendant parallèlement au plan de segment sphérique (34).

13. Attelage selon l'une quelconque des revendications précédentes, **caractérisé en ce que** la boule d'attelage (30, 130, 230) est une boule de segment sphérique qui présente au niveau de sa zone éloignée du col de boule (50, 150, 250) et sa zone tournée vers le col de boule (50, 150, 250) respectivement un aplatissement et/ou que les boules d'attelage (30, 130, 230) et/ou le col de boule (50, 150, 250) et/ou la section de gorge (40, 40, 240) est fabriquée par déformation, en particulier par forgeage et/ou compression et/ou laminage et/ou profilage.

14. Attelage selon l'une quelconque des revendications précédentes, **caractérisé en ce que** le matériau de base de la section de gorge (40, 140, 240) présente une structure d'assemblage avec des étendues de fibre sensiblement ou exclusivement ininterrompues ou intactes et/ou que le plan de segment sphérique (34) est à angle droit par rapport à un axe longitudinal du col de boule (50, 150, 250) et/ou que le contour de transition (45, 145, 245) présente une étendue courbée avec précisément deux, trois ou quatre rayons différents les uns des autres.

15. Procédé de fabrication d'un attelage (10, 110, 210) pour un véhicule automobile (80), dans lequel l'attelage (10, 110, 210) présente un bras d'attelage (20, 120, 220), au niveau de la zone d'extrémité libre duquel un col de boule (50, 150, 250) est réalisé, sur lequel une boule d'attelage (30, 130, 230) est agencée pour l'attelage d'une remorque (190) ou le couplage d'un support de charge au véhicule automobile (80), dans lequel la boule d'attelage (30, 130, 230) est de forme sphérique au niveau de son côté éloigné du col de boule (50, 150, 250) et présente un plan de segment sphérique (34) au niveau de son côté tourné vers le col de boule (50, 150, 250), dans lequel entre le plan de segment sphérique (34) et une section du col de boule (50, 150, 250) qui présente une périphérie extérieure inférieure au plan de segment sphérique (34), une section de gorge (40, 140, 240) avec un contour de transition (45, 145, 245) s'étendant de manière concave entre le col de boule (50, 150, 250) et le plan de segment sphérique (34) est agencée, qui passe avec une zone de transition de boule d'attelage (46) à un contour extérieur (35) de la boule d'attelage (30, 130, 230), en particulier au plan de segment sphérique (34), et avec une zone de transition de col de boule (47) à une surface extérieure (51) du col de boule (50, 150, 250), **caractérisé par** un usinage coupant et/ou une déformation en particulier un forgeage et/ou laminage et/ou profilage et/ou roulement, d'une ébauche (R) pour la formation de la section de gorge (40, 140, 240) de telle manière que le contour de transition (45, 145, 245) concave présente une étendue courbée avec un rayon non constant, dans lequel il est prévu avantageusement que lors de la déformation une structure d'assemblage de l'ébauche (R), en particulier une étendue de fibre d'un matériau brut de l'ébauche (R), soit entièrement ou sensiblement déformée et ininterrompue dans la zone de la section de gorge (40, 140, 240).
